Europäisches Patentamt

European Patent Office

Office européen des brevets

(19)

(11) Publication number: **0 064 808**
**B1**

(12) **EUROPEAN PATENT SPECIFICATION**

(45) Date of publication of patent specification: **04.09.85**

(21) Application number: **82301642.3**

(22) Date of filing: **29.03.82**

(51) Int. Cl.⁴: **B 65 D 1/28,** B 29 C 51/00,
B 32 B 27/06

(54) Method of making a container or other article.

(30) Priority: **23.04.81 GB 8112613**

(43) Date of publication of application:
**17.11.82 Bulletin 82/46**

(45) Publication of the grant of the patent:
**04.09.85 Bulletin 85/36**

(84) Designated Contracting States:
**DE FR GB NL SE**

(56) References cited:
**GB-A-1 059 131
US-A-3 159 698
US-A-3 849 174
US-A-4 033 929**

(73) Proprietor: **Lin Pac Plastic Containers Limited
470-474 Bath Road
Cippenham Slough SL1 6BJ (GB)**

(72) Inventor: **D'Silva, Oswald V.
20 Hudson Road Woodley
Reading Berkshire (GB)**

(74) Representative: **Rackham, Stephen Neil et al
GILL JENNINGS & EVERY 53-64 Chancery Lane
London WC2A 1HN (GB)**

Courier Press, Leamington Spa, England.

# Description

Disposable cups for hot drinks, and containers for hot snack foods such as noodles, need to provide insulation between the contents and the user's hand. A need for insulation also arises in disposable containers for other purposes, for example for ice cream.

Currently, disposable cups for hot drinks, available on the British market, are mainly of three kinds:—

A. With a thin sheet wall ribbed so as to reduce the contact with the user's fingers;

B. With two thin sheet walls, one within the other;

C. With a wall of expanded polystyrene.

Cups A are the cheapest, but provide limited insulation, and they are liable to shrink visibly if boiling water is poured into them.

Cups B provide good insulation but are costly to make. They also are liable to shrink.

Cups C provide very good insulation, but are costly to make, because the material is foamed actually in the mould which shapes the cup. The cycle of manufacture of one cup is much longer than the cycle of the thermoforming process commonly used to make cups A and the two components of cups B. Cups C also have a considerable stacking height when assembled in a stack.

It has also been proposed, in US—A—3 159 698 and in GB—A—1 059 131 to make a disposable cup or other food container by deforming a laminate consisting of a layer of foamed plastics material and one layer of solid or non-porous plastics material, by a thermoforming process.

According to the present invention such a method of making a container or other article by thermo-forming uses a laminate in which the foamed plastics material has a low degree of expansion so that the volume of its pores is less than the volume of its plastics material.

Preferably, the laminate is made by a process of co-extrusion. In this process, a single extruding head having a slit-shaped outlet receives two flows of material. One flow comprises a resin and a blowing agent which react within a heated housing, preferably containing a feed screw. The other flow comprises a resin. The flows are directed so that they emerge from the outlet as superimposed layers, each layer being of substantially uniform thickness.

As an example, to make a laminate of two layers the rates of supply of raw material may be:—

Constituents of foam layer:—
Resin (high impact polystyrene)      680 kg./hr.

Blowing Agent (Hoechst
      VN 22621-4)      0.68 kg./hr.

Constituent of solid layer:—
Resin (crystal G.P. polystyrene)      68 kg./hr.

The laminate is produced in a width of 107 to 184 cm.

The thickness of the laminate (i.e. the total of the thicknesses of its two constituent layers) is 1.2 mm. Each square metre weighs 1045.3 g. The bulk density of the laminate considered as a whole is about 0.967 g/cm$^3$. This is to be contrasted with the bulk density of solid sheet polystyrene, which is about 1.069 g/cm$^3$. It will be apparent that the degree of expansion in the foam layer is very low; and in fact the volume of the pores is considerably less than the volume of the plastics in the foam layer.

Such a laminate can be thermoformed in apparatus substantially identical to that used to manufacture "cups A" mentioned above, and under very similar operating conditions.

Preferably, as in the example above, the laminate has foam exposed on one face, and solid plastics exposed on the other face. Preferably an antistatic agent is applied, immediately after extrusion, to whichever face is to become the outside of the container.

In making a disposable drinking cup, the solid plastics is preferably towards the interior of the cup, so that the solid plastics is on the exposed surface of the usual outwardly-curled rim of the cup. This is comfortable for a user, and provides strength and good dimensional precision, which are needed in cups to be used in vending machines.

We have found that the laminate can be deformed by the thermoforming process, to the extent required to make a cup with a mouth diameter to depth ratio of about 1:1.5, without any localised weakening of the cup.

This behaviour is in contrast with existing experience in making containers by deformation of foamed plastics sheet. Such sheet is typically 1.6 mm. thick, and the volume of pores in the foam is greater than the volume of plastics in the foam. This sheet cannot be deeply drawn. It is successfully used to make shallow trays for use in packaging of meat portions. Such sheet cannot be used to make cups; as stated above, "Cups C" are foamed in moulds individually.

We have found that containers according to this invention do not visibly shrink when filled with boiling water. We believe that the explanation is that the insulating properties of the cup ensure that the outer part of the thickness of the wall remains at a sufficiently low temperature to retain adequate strength.

Although of particular interest for use where insulating properties are of value, containers made in accordance with this invention also have the property that, as compared with solid wall containers, they have greater rigidity for a given weight of material in the container wall. Other articles that may be made by the method in accordance with this invention are flower pots and disposable plates.

The thermal properties of the laminate and of containers and other articles formed from it can be controlled by control of the thickness of the layers and of the degree of expansion of the foam. The plastics in the two layers are preferably the same as this facilitates the reclaiming of scrap portions of sheet produced during manufacture of the articles, but different plastics may be used. In either case, the plastics may be of the same colour or of different colours.

## Claims

1. A method of making a container or other article by deforming a laminate consisting of a layer of foamed plastics material and a layer of solid or non-porous plastics material by a thermoforming process, characterised in that the foamed plastics material has a low degree of expansion so that the volume of its pores is less than the volume of its plastics material.

2. A method according to claim 1, in which the bulk density of the laminate is substantially 0.967 g/cm$^3$.

3. A method according to claim 1 or 2, in which the plastics in the layers are the same.

4. A method according to any one of the preceding claims, in which the container which is made as a disposable cup with a mouth diameter to depth ratio of about 1:1.5.

5. A method according to any one of the preceding claims, in which the laminate used has foam exposed on one face, and solid plastics exposed on the other face, and the container which is made is a disposable drinkig cup having an outwardly-curled rim, the solid plastics material being on the inside of the cup and on the exposed surface of the rim.

6. A container, or other article, which has been made by a method according to any one of the preceding claims.

## Revendications

1. Procédé pour fabriquer un récipient ou un autre article par la déformation, par un processus de thermoformage, d'un stratifié formé d'une couche de plastique mousse et d'une couche de plastique massif ou non poreux, caractérisé en ce que le plastique mousse présente un faible degré d'expansion, de sorte que le volume de ses pores est inférieure au volume de sa matière plastique.

2. Procédé selon la revendication 1, où la masse volumique apparente du stratifié est sensiblement de 0,967 g/cm$^3$.

3. Procédé selon la revendication 1 ou 2, où le plastique des deux couches est le même.

4. Procédé selon l'une quelconque des revendications précédentes, où le récipient forme un gobelet jetable dont le rapport entre le diamètre de l'ouverture et la profondeur est d'environ 1:1,5.

5. Procédé selon l'une quelconque des revendications précédentes, où la mousse est exposée sur une face du stratifié utilisé et le plastique massif est exposé sur l'autre face du stratifié, et le récipient fabriqué est un gobelet jetable avec un rebord formé par courbure vers l'extérieur, le plastique massif formant l'intérieur du gobelet et la surface exposée du rebord.

6. Récipient ou autre article fabriqué par un procédé selon l'une quelconque des revendications précédentes.

## Patentansprüche

1. Verfahren zur Herstellung eines Behälters oder eines anderen Gegenstandes durch Verformen eines Laminats, welches aus einer Schicht von Schaumstoffmaterial und einer Schicht von festem oder nicht porösem Kunststoffmaterial besteht, durch ein Thermoformungsverfahren, dadurch gekennzeichnet, daß das Schaumstoffmaterial einen geringen Expansionsgrad hat, so daß das Volumen seiner Poren kleiner als das Volumen seines Kunststoffmaterials ist.

2. Verfahren nach Anspruch 1, bei welchem die Raumdichte des Laminats im wesentlichen 0,967 g/cm$^3$ beträgt.

3. Verfahren nach Anspruch 1 oder 2, bei welchem die Schichten aus demselben Kunststoff bestehen.

4. Verfahren nach irgendeinem der vorhergehenden Ansprüche, bei welchem der hergesellte Behälter ein Einwegbecher ist, dessen Öffnungs/Tiefen-Verhältnis etwa 1:1,5 beträgt.

5. Verfahren nach irgendeinem der vorhergehenden Ansprüche, bei welchem das verwendte Laminat auf seiner einen exponierten Fläche Schaumstoff und auf seiner anderen exponierten Fläche festen Kunststoff aufweist und der hergestellte Behälter ein Einweg-Trinkbecher mit einem nach außen umgebogenen Rand ist, wobei das feste Kunststoffmaterial sich auf der Innenseite des Bechers und auf der exponierten Oberfläche des Randes befindet.

6. Behälter oder ein anderer Gegenstand, welcher nach einem Verfahren nach einem der vorhergehenden Ansprüche hergestellt ist.